# EUROPEAN PATENT APPLICATION

(11) **EP 4 801 150 A1**
(43) Date of publication of application: **02.09.2026**
(21) Application number: 24896206.0
(22) Date of filing: 05.11.2024
(51) Int. Cl.: H04W 72/0446

(54) **COMMUNICATION METHOD AND APPARATUS**

(30) Priority: 30.11.2023 CN 202311631689
(71) Applicant: Huawei Technologies Co., Ltd., Shenzhen, Guangdong 518129 (CN)
(72) Inventor: ZHANG, Yi, Shenzhen, Guangdong 518129 (CN); QI, Hong, Shenzhen, Guangdong 518129 (CN); SU, Hongjia, Shenzhen, Guangdong 518129 (CN)
(74) Representative: Goddar, Heinz J.
(86) International application number: PCT/CN2024/130018
(87) International publication number: WO 2025/113115

(57) **Abstract**

This application discloses a communication method and apparatus. The method includes: A first terminal device sends first indication information to a second terminal device, where the first indication information indicates a first time-frequency resource, and the first time-frequency resource is used by the first terminal device to send first data; the second terminal device triggers a sidelink SL beam failure when the second terminal device does not receive the first data from the first terminal device on at least one time-frequency resource in the first time-frequency resource; and the second terminal device sends a first reference signal to the first terminal device, where the first reference signal is used for beam failure recovery. In the method, the SL beam failure is triggered when no data is received on a time-frequency resource, so that resource waste caused by SL beam failure determining performed by sending a periodic reference signal can be avoided.

## Description

This application claims priority to Chinese Patent Application No. 202311631689.3, filed with the China National Intellectual Property Administration on November 30, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

With development of wireless technologies, to alleviate network load, a device-to-device (device-to-device, D2D) communication technology is proposed. User equipments (user equipment, UE) within a specific distance range can directly communicate, by using the D2D communication technology, with each other by using a sidelink (sidelink, SL), without requiring relaying through a third-party device (for example, a base station).

In air interface transmission from a network device to a terminal device (UTRAN-to-UE, Uu) in a new radio (new radio, NR) system, beam failure recovery for an FR2 frequency band (that is, 24250 MHz to 52600 MHz) includes processes such as beam failure detection (beam failure detection, BFD) and candidate beam detection (candidate beam detection, CBD). When the network device and the terminal device configure a periodic reference signal as a reference signal for the BFD to perform beam failure detection, resource overheads are high.

### SUMMARY

Embodiments of this application disclose a communication method and apparatus. In the method, the SL beam failure is triggered when no data is received on a time-frequency resource, so that resource waste caused by SL beam failure determining performed by sending a periodic reference signal can be avoided.

The following describes this application from different aspects. It should be understood that mutual reference may be made to the following implementations and beneficial effects of different aspects.

According to a first aspect, this application discloses a communication method. The method may be performed by a second terminal device or a module (for example, a chip) in the second terminal device. The method may include: receiving first indication information from a first terminal device, where the first indication information indicates a first time-frequency resource, and the first time-frequency resource is used by the first terminal device to send first data; triggering a sidelink SL beam failure when the first data from the first terminal device is not received on at least one time-frequency resource in the first time-frequency resource; and sending a first reference signal, where the first reference signal is used for beam failure recovery.

In this embodiment of this application, a resource selection feature of the SL is used to determine whether to trigger the SL beam failure based on whether there is data transmission on the first time-frequency resource (that is, a reserved resource) indicated by the first terminal device. In this method, a transmit end (that is, the first terminal device) does not need to send a periodic reference signal for determining, so that fast beam failure recovery detection can be implemented, resource waste caused by sending the periodic reference signal can be avoided, and resource overheads can be reduced.

With reference to the first aspect, in a possible implementation, the at least one time-frequency resource is at least one retransmission resource of the first data; the at least one time-frequency resource is at least one periodic resource of the first data; or the at least one time-frequency resource includes at least one retransmission resource of the first data and at least one periodic resource of the first data.

A resource type of the at least one time-frequency resource is not limited in embodiments of this application, and the at least one time-frequency resource may be the retransmission resource of the first data and/or the periodic resource of the first data. In different resource transmission scenarios, whether to trigger the SL beam failure may be determined based on whether data is transmitted on the reserved resource, providing flexible applicability.

With reference to the first aspect, in a possible implementation, the at least one time-frequency resource is N periodic resources of the first data, N is a positive integer, and the triggering the sidelink SL beam failure when the first data from the first terminal device is not received on the at least one time-frequency resource in the first time-frequency resource includes: triggering the SL beam failure when no data from the first terminal device is received on the N periodic resources.

With reference to the first aspect, in a possible implementation, N is an integer greater than 1, and two adjacent periodic resources in the N periodic resources are spaced by equal period duration in time domain.

That two adjacent periodic resources in the N periodic resources are spaced by equal period duration in time domain means that the N periodic resources are consecutive, where N is an integer greater than 1. For example, the second terminal device may trigger the SL beam failure when receiving no data from the first terminal device on a plurality of consecutive periodic resources. A quantity of consecutive periodic resources is not limited in this application.

In this embodiment of this application, the second terminal device triggers the SL beam failure when receiving no data from the first terminal device on a plurality of adjacent periodic resources in time domain. This can avoid erroneous triggering of the SL beam failure caused by individual data transmission failures due to other reasons, and improve accuracy of SL beam failure triggering.

With reference to the first aspect, in a possible implementation, the at least one time-frequency resource is the at least one retransmission resource of the first data; and the triggering the sidelink SL beam failure when the first data from the first terminal device is not received on the at least one time-frequency resource in the first time-frequency resource includes: triggering the SL beam failure when no data from the first terminal device is received on one or two retransmission resources in the at least one retransmission resource.

With reference to the first aspect, in a possible implementation, the triggering the sidelink SL beam failure when no data from the first terminal device is received on the at least one time-frequency resource in the first time-frequency resource includes: sending second indication information to the first terminal device when no data from the first terminal device is received on the at least one time-frequency resource, where the second indication information indicates that no data is received on the at least one time-frequency resource; triggering the SL beam failure when third indication information from the first terminal device is not received in a first time period, where the third indication information indicates that no beam failure occurs.

In this embodiment of this application, the second terminal device sends beam failure acknowledgment information (that is, the second indication information) to the first terminal device when determining that there is no data transmission on the first time-frequency resource (that is, the reserved resource) indicated by the first terminal device; and triggers the SL beam failure when not receiving the third indication information from the first terminal device in the first time period, where the third indication information indicates that no beam failure occurs. In the method, erroneous triggering of the SL beam failure by the second terminal device caused by the first terminal device not transmitting data due to another reason can be avoid.

With reference to the first aspect, in a possible implementation, the second indication information is sent by using a first physical sidelink feedback channel PSFCH resource, and the first PSFCH resource and a second PSFCH resource used to feed back a hybrid automatic repeat request HARQ of the first data are in same time domain but different frequency domain. In this embodiment of this application, the first PSFCH resource and the second PSFCH resource are configured to be in different frequency domain, so that the PSFCH resource used to transmit the second indication information and the PSFCH resource used to feed back the HARQ of the first data can be distinguished.

In a possible implementation, the second indication information may reuse an existing HARQ manner and resource. To be specific, the second terminal device may feed back, to the first terminal device when not receiving the first data, a response message (for example, a NACK) corresponding to the first data. In this case, the third indication information may be to-be-retransmitted data of the first data. The second terminal device determines whether to trigger the SL beam failure based on whether the to-be-retransmitted data is received in the first time period. For example, if the to-be-retransmitted data is not received, the SL beam failure is triggered; or if the to-be-retransmitted data is received, the SL beam failure is not triggered.

With reference to the first aspect, in a possible implementation, a start moment and an end moment of the first time period are determined based on a moment at which the second indication information is sent and a time offset.

With reference to the first aspect, in a possible implementation, the first reference signal is one of a sidelink synchronization signal block S-SSB, a sidelink channel state information reference signal SL CSI-RS, or a demodulation reference signal DMRS.

According to a second aspect, this application discloses a communication method. The method may be performed by a first terminal device or a module (for example, a chip) in the first terminal device. The method may include: sending first indication information to a second terminal device, where the first indication information indicates a first time-frequency resource, and the first time-frequency resource is used to send first data; receiving second indication information from the second terminal device, where the second indication information indicates that no data is received on at least one time-frequency resource in the first time-frequency resource; and sending third indication information to the second terminal device in a first time period, where the third indication information indicates that no sidelink SL beam failure occurs.

In this embodiment of this application, when determining that no data is received on the first time-frequency resource (that is, a reserved resource) indicated by the first terminal device, the second terminal device may send beam failure acknowledgment information (that is, the second indication information) to the first terminal device; and after receiving the second indication information, if the first data is not sent due to another reason, the first terminal device may send the third indication information to the second terminal device in the first time period. In the method, erroneous triggering of the SL beam failure by the second terminal device when the first terminal device does not transmit data due to another reason can be avoid. In the method, accuracy of SL beam failure triggering can be improved.

According to a third aspect, this application provides a communication apparatus. The communication apparatus may be a second terminal device or a chip/circuit in the second terminal device. The communication apparatus is configured to perform the method according to any one of the first aspect or the possible implementations of the first aspect. The communication apparatus includes a unit configured to perform the method according to any one of the first aspect or the implementations of the first aspect.

According to a fourth aspect, this application provides a communication apparatus. The communication apparatus may be a first terminal device or a chip/circuit in the first terminal device. The communication apparatus is configured to perform the method according to any one of the second aspect or the possible implementations of the second aspect. The communication apparatus includes a unit configured to perform the method according to any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments provided below. For beneficial effects of the third aspect and the fourth aspect, refer to related descriptions of the first aspect and the second aspect. Details are not described herein again.

According to a fifth aspect, this application provides a communication apparatus. The communication apparatus may include a processor and an interface circuit. The processor is connected to the interface circuit. The interface circuit is configured to exchange (or receive/send or input/output) information or data, the processor is configured to run program instructions, and the communication apparatus is caused to perform the method according to any one of the first aspect, the second aspect, or the possible implementations of the first aspect or the second aspect. The interface circuit may be a communication interface or a transceiver. The transceiver may be a radio frequency module in the communication apparatus, a combination of a radio frequency module and an antenna, or an input/output interface of a chip or a circuit.

According to a sixth aspect, this application provides a readable storage medium. The readable storage medium stores program instructions. When the program instructions are run on a computer, the computer is caused to perform the method according to any one of the first aspect, the second aspect, or the possible implementations of the first aspect or the second aspect.

According to a seventh aspect, this application provides a program product including program instructions. When the program product runs, the method according to any one the first aspect, the second aspect, or the possible implementations of the first aspect or the second aspect is performed.

According to an eighth aspect, this application provides an apparatus. The apparatus may be implemented in a form of a chip, or may be implemented in a form of a device. The apparatus includes a processor. The processor is configured to read and execute a program stored in a memory, to perform the communication method provided in one or more of the first aspect, the second aspect, or any possible implementation of the first aspect or the second aspect. Optionally, the apparatus further includes a memory, and the memory is connected to the processor through a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a ninth aspect, this application provides a communication system. The communication system includes a second terminal device and a first terminal device. The second terminal device is configured to perform the method according to any one of the first aspect or the possible implementations of the first aspect. The first terminal device is configured to perform the method according to any one of the second aspect or the possible implementations of the second aspect.

For technical effects achieved in the foregoing aspects, mutual reference may be made to the foregoing aspects, or reference may be made to beneficial effects in the following method embodiments. Details are not described herein.

### BRIEF DESCRIPTION OF DRAWINGS

FIG. 1A to FIG. 1C are diagrams of related technologies according to an embodiment of this application;
FIG. 1 and FIG. 2 are diagrams of communication systems according to an embodiment of this application;
FIG. 3 is a flowchart of a communication method according to an embodiment of this application;
FIG. 4 is a schematic flowchart of another communication method according to an embodiment of this application;
FIG. 5A is a diagram of a UE 1 indicating a retransmission resource and a periodic resource to a UE 2 according to an embodiment of this application;
FIG. 5B is a schematic flowchart of beam failure recovery according to an embodiment of this application;
FIG. 6 is a schematic flowchart of still another communication method according to an embodiment of this application;
FIG. 7A is a diagram of sending beam failure acknowledgment information according to an embodiment of this application;
FIG. 7B is another schematic flowchart of beam failure recovery according to an embodiment of this application;
FIG. 8 is a diagram of a structure of a communication apparatus according to an embodiment of this application;
FIG. 9 is a diagram of another structure of a communication apparatus according to an embodiment of this application; and
FIG. 10 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, the terms such as "first" and "second" are merely used to distinguish between different objects, and do not limit quantities and execution sequences. In addition, the terms such as "first" and "second" do not indicate a definite difference. In addition, the terms such as "include" and "have" and any other variants thereof are intended to cover a nonexclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists. In addition, "at least one (item)", "one or more of the following items (pieces)", or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In the descriptions of this application, the terms such as "example" or "for example" indicate giving an example, an illustration, or a description. Any embodiment or design scheme described as "example", "such as" or "for example" in this application should not be explained as being more preferred or having more advantages than another embodiment or design scheme. Exactly, use of the term "example", "such as", "for example", or the like is intended to present a related concept in a specific manner.

It may be understood that, in descriptions of this application, both "when" and "if" mean that an apparatus performs corresponding processing in an objective situation, are not intended to limit time, do not require the apparatus to necessarily have a determining action during implementation, and do not mean another limitation. The apparatus performing the corresponding processing in the objective situation includes: The corresponding processing can be performed when the objective situation is met; or the corresponding processing can be performed only when the objective situation and other situations are met.

"Simultaneously" in this application may be understood as being at a same time point, may be understood as being in a time period, or may be understood as being in a same period, and may be specifically understood with reference to context.

In this application, an element represented in a singular form is intended to represent "one or more", but does not represent "one and only one", unless otherwise specified.

In addition, the terms "system" and "network" may be used interchangeably in this specification.

It may be understood that, in embodiments of this application, "A corresponds to B", "A corresponds to B", "B corresponding to A", or a similar expression thereof indicates that B is associated with A, and B may be determined based on A. Determining B based on A does not mean that B is determined based only on A. B may alternatively be determined based on A and/or other information.

For ease of understanding the technical solutions in embodiments of this application, the following first briefly describes technologies and terms related to this application.

### 1. Cellular vehicle-to-everything (cellular vehicle-to-everything, C-V2X)

The C-V2X is a V2X communication technology developed based on a cellular system, and uses and enhances a current cellular network function and element, to implement low-latency and high-reliability communication between various nodes in a vehicle network. For example, the C-V2X includes vehicle to vehicle (vehicle to vehicle, V2V) communication, vehicle to pedestrian (vehicle to pedestrian, V2P) communication, vehicle to infrastructure (vehicle to infrastructure, V2I) communication, and vehicle to network (vehicle to network, V2N) communication. As a cellular system evolves from a 4th generation (4th generation, 4G) long term evolution (long term evolution, LTE) to a 5th generation (5th generation, 5G), the C-V2X evolves from LTE-V2X to NR-V2X(new radio V2X, NR-V2X).

5G NR V2X can support lower transmission latency, more reliable communication transmission, higher throughput, and better user experience, thereby meeting requirements of more extensive application scenarios. Further, a vehicle-to-vehicle communication technology supported by V2X may be extended to D2D communication in any system.

This application is applicable to D2D communication in any system.

### 2. NR SL system

In a network coverage area, a terminal device may obtain SL resource pool (resource pool) configuration information and/or SL bandwidth part (bandwidth part, BWP) configuration information by receiving a system information block (system information block, SIB) of a network device, cell-specific (cell-specific) radio resource control (radio resource control, RRC) signaling, or UE-specific (UE-specific) RRC signaling of the terminal device. Alternatively, the terminal device may use preconfigured SL resource pool configuration information or SL BWP configuration information. The SL BWP configuration information may include SL resource pool information that is for configuring a quantity of resource pools included in a BWP. The SL BWP configuration information may include SL bandwidth information that indicates a size of a bandwidth for SL communication, for example, indicates that an SL bandwidth is 20 megahertz (MHz).

### (1) Sidelink control information (sidelink control information, SCI)

SCI of the NR SL system is classified into first-stage SCI and second-stage SCI. A physical sidelink control channel (physical sidelink control channel, PSCCH) carries the first-level SCI, and the first-level SCI is used to schedule the second-level SCI and the physical sidelink shared channel (physical sidelink shared channel, PSSCH). Because an SL is a distributed system, all UEs can decode the second-level SCI and the PSSCH only after correctly decoding the first-level SCI.

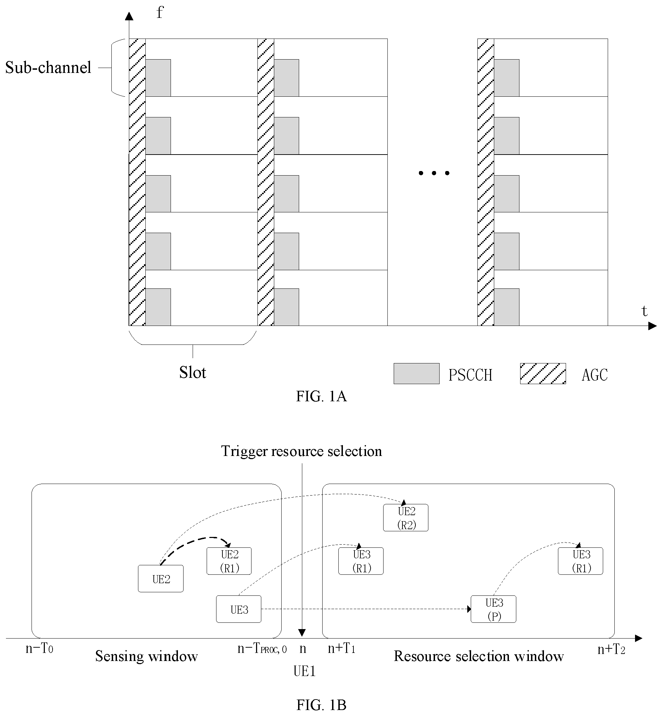

FIG. 1A is a diagram of an example of the PSCCH. As shown in FIG. 1A, a horizontal axis is time (t), a vertical axis is frequency (f), a gray rectangular area is used to represent the PSCCH, and a diagonal rectangular area is used to represent automatic gain control (auto gain control, AGC). It can be learned that the PSCCH may exist in each subchannel (subchannel) in each slot. To be specific, a time domain start position of a PSCCH is a 2nd symbol used for SL transmission in each slot (slot), and a length may be two or three symbols (determined based on resource pool configuration information). A frequency domain position is an index (index) of a minimum physical resource block (physical resource block, PRB) of each subchannel, and a length is at least 10 PRBs (determined based on the resource pool configuration information) but does not exceed a size of the subchannel.

A frequency resource assignment field and a time resource assignment field in the first-level SCI respectively indicate a frequency domain resource and a time domain resource for transmitting the PSSCH. A resource reservation period field indicates a resource for periodic reservation of PSSCH transmission. A value of the resource reservation period field is configured by the network device, preconfigured, or predefined. For example, the value is indicated by using first RRC signaling, and sl-ResourceReservePeriod1 may be determined by using the first RRC signaling. A format of the second-level SCI is indicated by using a 2nd-stage SCI format field in the first-level SCI.

### (2) Resource selection procedure

In a V2X SL of Rel-16, a transmission resource of a transmit end in a user-selected resource mode (mode 2) does not depend on a base station. The transmit end UE 1 selects, in a resource selection window based on a result of sensing in a sensing window of the transmit end UE 1, a transmission resource for communication.

Assuming that the transmit end UE 1 triggers resource selection in a slot n, a specific resource selection procedure is shown in FIG. 1B.

Step 1: Determine a candidate resource *R_{x,y}* in units of one slot and *L_{subCH}* consecutive subchannels and a resource selection window [*n* + *T*₁, *n* + *T*₂], where $0 \leq {T}_{1} \leq {T}_{proc , 1}^{SL} , {T}_{proc , 1}^{SL}$ is determined in Table 1, *µ_{SL}* is a configured subcarrier spacing, and *T*₁ is selected based on implementation. If *T*_{2*min*} (configured by higher layers) is less than the remaining packet delay budget (packet delay budget, PDB), then *T*_{2*min*} ≤ *T*₂ ≤ *PDB,* the selection of *T*₂ is based on implementation; otherwise, *T*₂ is equal to the remaining *PDB.*

Step 2: Determine a sensing window $\left[n-{T}_{0}, n-{T}_{proc , 0}^{SL}\right)$, where *T*₀ is configured by a higher-layer parameter and ${T}_{proc , 0}^{SL}$ is determined by Table 2.

Step 3: Determine a reference signal received power (reference signal received power, RSRP) threshold *Th*(*pᵢ*, *pⱼ*), where the RSRP threshold and *prioTX* of to-be-sent data are related to a priority *prioRX* indicated by the received SCI, and *Th(pi, pⱼ*) is specifically an (*prio*RX+(*prio*TX-1) *8)^{th} threshold in the RSRP threshold set configured for the resource pool.

Step 4. Initialize an available resource set *S_{A}* to include all time-frequency resources in the resource selection window.

Step 5. Exclude the following time-frequency resources from *S_{A}*: slots reserved for all periodic resources configured in a resource pool corresponding to a slot (a slot for sending) that is not sensed in the sensing window.

Step Sa: If the time-frequency resources excluded from *S_{A}* are less than X% of the total resources in the resource selection window, perform initialization in step 4 again.

Step 6: Continue to exclude the following time-frequency resources from *S_{A}* : time-frequency resources that are reserved for received and successfully decoded 1st-stage SCI, of which results of RSRP measurement on PSSCH demodulation reference signals (demodulation reference signals, DMRSs) are higher than the RSRP threshold determined in step 3, that are in the resource selection window, and that include a retransmission resource indicated by the 1st-stage SCI and a periodically reserved resource.

Step 7: If the remaining resources in *S_{A}* are less than X % of the total resources of the resource selection window, and a value of X % is configured by the resource pool and is related to *prio*TX, a manner of increasing the RSRP threshold determined in step 3 (increased by 3 each time) is used until the remaining resources in *S_{A}* are not less than X % of the total resources of the resource selection window, and step 4 continues to be performed.

*S_{A}* is reported to a higher layer (medium access control (MAC) layer).

**Table 1**

| ***µ_{SL}*** | ${T}_{proc , 1}^{SL}$ [Timeslot] |
|---|---|
| 0 | 3 |
| 1 | 5 |
| 2 | 9 |
| 3 | 17 |

**Table 2**

| ***µ_{SL}*** | ${T}_{proc , 0}^{SL}$ [Timeslot] |
|---|---|
| 0 | 1 |
| 1 | 1 |
| 2 | 2 |
| 3 | 4 |

### 3. Physical sidelink feedback channel (physical sidelink feedback channel, PSFCH)

The NR SL uses the PSFCH to provide HARQ-ACK feedback. To be specific, for one PSSCH transmission, if a transmit-end user places HARQ-ACK feedback-enabled information into control information, a receive-end user needs to feed back corresponding ACK/NACK information based on a current PSSCH decoding result. The ACK/NACK information is transmitted through the PSFCH channel. The PSFCH channel resource is a periodic resource configured in the resource pool, and a period configuration parameter ${N}_{PSSCH}^{PSFCH}$ of the PSFCH channel resource may be 0, 1, 2, or 4. Where ${N}_{PSSCH}^{PSFCH} = 0$ indicates that no PSFCH resource is configured in the resource pool, and PSFCH transmission is not enabled in the resource, that is, physical layer HARQ feedback is not supported; and ${N}_{PSSCH}^{PSFCH} = 1 , 2 , 4$ indicates that there is one PSFCH feedback timeslot in each ${N}_{PSSCH}^{PSFCH}$ SL timeslot in a time window.

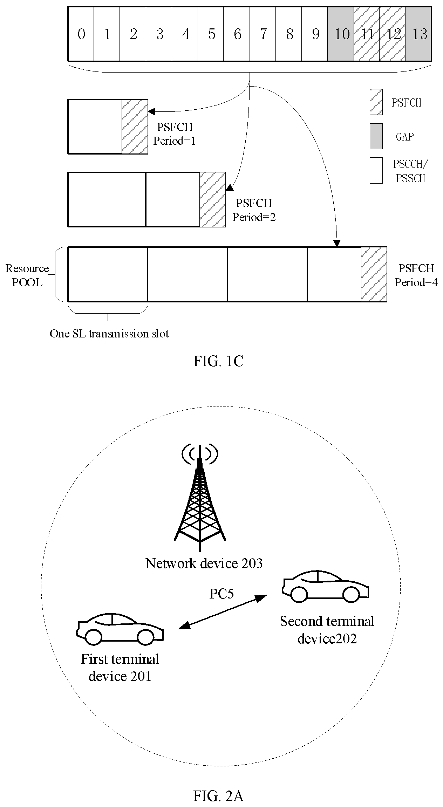

FIG. 1C is a schematic diagram of a PSFCH according to an embodiment of this application. As shown in FIG. 1C, in a timeslot in which a physical resource of the PSFCH is located, the PSFCH occupies the last two orthogonal frequency division multiplexing (Orthogonal Frequency Division Multiplexing, OFDM) symbols before a guard interval symbol (GAP), that is, diagonal rectangles marked with 11 and 12 in FIG. 1C. FIG. 1C further shows an example of time-frequency locations of PSFCHs in SL transmission when PSFCH periods are 1, 2, and 4 respectively.

A bitmap (bitmap) of a PSFCH frequency domain resource is configured for the resource pool, to indicate whether a specific PRB in a frequency domain resource on which the resource pool is located can be used as a PSFCH resource. To be specific, a length of bit information included in the bitmap is equal to a quantity of PRBs in the resource pool. 1 in the bitmap indicates that a corresponding PRB can be used for PSFCH transmission, and a bit 0 indicates that a corresponding PRB resource cannot be used for PSFCH transmission.

### 3. Beam Management Technology

As an important technology proposed for FR2 in 5G NR, beam management is a process in which a base station (Base Station, BS) and UE obtain and maintain a set of beams used for sending and receiving. It is a reference workflow for beamforming in a MIMO system. Table 3 shows frequency range definitions of FR1 and FR2.

**Table 3: Definition of the frequency range**

| Frequency range name | Corresponding frequency range |
|---|---|
| FR1 | 410 MHz - 7125 MHz |
| FR2 | 24250 MHz - 52600 MHz |

Beam management may be divided into three operating states. Operations in the states are as follows:
P-1: The UE measures a BS transmit beam set, and selects a BS transmit beam and a UE receive beam.
P-2: Based on P-1, the UE measures a smaller BS transmit beam set, to improve a BS transmit beam.
P-3: The UE measures a same BS transmit beam by using different receive beams, to improve a receive beam of the UE.

Based on the foregoing content, downlink beam management is performed, and a basic procedure of downlink beam management is as follows: The BS configures a maximum of 64 beam directions, and each beam direction corresponds to one synchronization signal block (synchronization signal block, SSB) and a time-frequency resource that should be used by the UE for beam reporting. The base station sequentially sends SSBs in directions in a sweeping manner, and the UE performs beam measurement to obtain RSRPs of the SSBs. Then, the terminal device selects an SSB set by comparing RSRPs, and reports, to the base station on a given time-frequency resource, sequence numbers of SSBs in the set and corresponding RSRPs. The base station performs beam determining based on the reported information. To implement transmit beam training in the P-2 working state, the BS allocates channel state information reference signal (channel state information reference signal, CSI-RS) resources to transmit beams, and then sends these CSI-RS resources in a periodic beam scanning manner. In these CSI-RS resources, the maximum number of CSI-RS ports is 2, and other uncertain resource mapping information needs to be configured by the BS and indicated to the UE by using RRC signaling. In addition, the BS sends a CSI-RS resource only in a single beam direction at a moment. The terminal device performs beam measurement to obtain a CSI-RS reference signal received power RSRP, and obtains a CSI-RS reference signal resource indicator (CSI-RS Resource Indicator, CRI). After measuring the RSRP, the UE selects one or more RSRP values and corresponding CRIs by means of comparison, and reports the selected RSRP values and corresponding CRIs to the BS on a given time-frequency resource. The BS determines, by using the reported information, a transmit beam that should be used.

A similar procedure is used for uplink beam management, but different reference signals are used.

### 4. NR Uu FR2 beam failure recovery

In the NR Uu, beam failure recovery of FR2 includes beam failure detection, candidate beam identification, beam failure recovery request (beam failure recovery request, BFRQ), and beam failure recovery response (beam failure recovery response, BFRR). The details are described as follows:
(1) Beam failure detection. Currently, a determining condition for beam failure detection is as follows: All serving beams are considered to fail for N consecutive times according to the following criteria: where N is indicated by a beamFailureInstanceMaxCount field in RRC signaling; and a criterion that the serving beam is considered to be failed is that a hypothetical (hypothetical) physical layer downlink control channel (physical downlink control channel, PDCCH) block error rate (block error rate, BLER) corresponding to RSRP of a reference signal used to detect a beam failure in the serving beam is higher than a given threshold, where the threshold is a default BLER threshold used for declaring out-of-synchronization (out-of-sync) in radio link monitoring (radio link monitoring, RLM).
(2) Candidate beam identification. The gNB sends a corresponding reference signal in a series of candidate beams, to help the UE identify a process in which a connection can be restored between a transmit beam pair and a receive beam pair. The reference signal may be a CSI-RS or an SSB, and is specifically indicated by a candidateBeamRSList field in RRC signaling. When the UE finds that the RSRP of the reference signal in the candidate beam is higher than a configured threshold, the UE considers that the corresponding candidate beam is available. The threshold is explicitly or implicitly indicated by the rsrp-ThresholdSSB field in the RRC signaling.
(3) Beam failure recovery request. The UE mainly sends the BFRQ on the physical layer random access channel (physical random access channel, PRACH), and there is also a solution that the BFRQ may be sent on the physical layer uplink control channel (physical uplink control channel, PUCCH) in a scanning manner. The BFRQ contains the identification information of the UE. If the UE identifies a new gNodeB candidate transmit beam, the BFRQ also contains information about the candidate beam. If the UE does not identify a new gNodeB candidate transmit beam, the BFRQ indicates that the candidate beam does not exist.
(4) Beam failure recovery response. The UE monitors the gNodeB response to the BFRR. The UE monitors the response of the gNodeB to the BFRR within a time window. If a response is received, the BFR is successful. If no response is received, the UE sends the BFRQ again. If the UE does not receive the response from the gNodeB for a certain number of times, the UE notifies the upper layer entity that it is in the link failure state. The higher-layer link recovery mechanism will be used in the future.

Currently, in NR Uu, beam failure recovery on the FR2 frequency band includes processes such as BFD and CBD. The network device and the terminal device need to configure a periodic reference signal as a BFD reference signal to perform beam failure detection, which causes a problem of high resource overheads. In addition, there is no beam failure recovery technology in the SL system. If a beam failure recovery technology for FR2 in NR Uu is used for beam failure recovery in the SL system, and a periodic reference signal is configured between every two UEs as a BFD reference signal, because there is no unified scheduling by a base station in the SL system, a reference signal for periodic BFD configured between every two UEs in the SL system is greater than a reference signal for periodic BFD sent by a base station to a plurality of UEs in the NR system, causing greater resource overheads.

In view of this, an embodiment of this application provides a communication method. In the method, an SL beam failure is triggered when no data is received on a time-frequency resource, so that a resource waste caused by SL beam failure determining performed by sending a periodic reference signal can be avoided.

Based on the foregoing descriptions, to better understand the key management method and the related apparatus provided in this application, the following first describes a network architecture to which embodiments of this application are applied.

FIG. 2A to FIG. 2C are schematic diagrams of network architectures of a communication system according to an embodiment of this application.

As shown in FIG. 2A to FIG. 2C, the communication system may include at least a first terminal device 201 and a second terminal device 202. Optionally, the communication system may further include a network device. FIG. 2A to FIG. 2C show an example in which both a first terminal device 201 and a second terminal device 202 are vehicles, and the first terminal device 201 and the second terminal device 202 communicate with each other through near field communication (proximity communication, PC5).

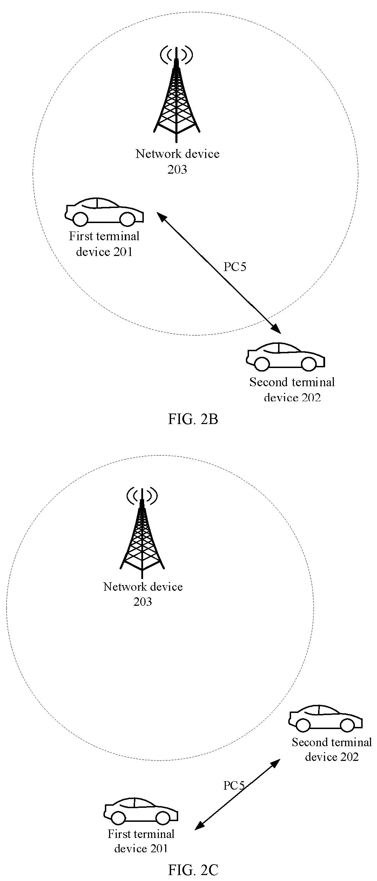

This application is applicable to a communication scenario with network coverage and a communication scenario without network coverage. As shown in FIG. 2A, both the first terminal device 201 and the second terminal device 202 may be located within a coverage area of the network device 203. Alternatively, as shown in FIG. 2B, one of the first terminal device 201 and the second terminal device 202 may be located within a coverage area of the network device 203, and the other may be located outside the coverage area of the network device 203. FIG. 2B shows an example in which the first terminal device 201 is located within the coverage area of the network device 203, and the second terminal device 202 is located outside the coverage area of the network device 203. Alternatively, as shown in FIG. 2C, both the first terminal device 201 and the second terminal device 202 may be located outside a coverage area of the network device 203.

The communication system in this application is a system in which a user end directly communicates with a user end, such as V2X or D2D. For example, both the first terminal device 201 and the second terminal device 202 have a V2X communication capability. By using a cellular network-based V2X technology, the first terminal device 201 and the second terminal device 202 may directly communicate with each other by using an SL. For example, by using a cellular network-based V2X technology, the first terminal device 201 and the second terminal device 202 may directly exchange vehicle data by using an SL, to implement mutual perception between devices (for example, vehicles).

In this application, the SL communication between the first terminal device 201 and the second terminal device 202 may be a mode in which a user autonomously selects a resource. This application imposes no limitation on the mode in which the user autonomously selects a resource.

The first terminal device 201 and the second terminal device 202 are entities on a user side that are configured to receive or transmit a signal.

In this embodiment of this application, the first terminal device 201 and the second terminal device 202 may be respectively an in-vehicle communications module, a communications terminal, or another embedded communications module, a handheld communications terminal (such as a mobile phone or a tablet computer), an RSU, or the like. In some embodiments, the first terminal device 201 and the second terminal device 202 may have a same device form. For example, both the first terminal device 201 and the second terminal device 202 are vehicle-mounted communications terminals. In some other embodiments, device forms of the first terminal device 201 and the second terminal device 202 may be different. For example, the first terminal device 201 is an in-vehicle communications terminal, and the second terminal device 202 is an RSU. In other words, the embodiments of this application are applicable to scenarios such as an in-vehicle communications module (a communications terminal) and an in-vehicle communications module (a communications terminal), an in-vehicle communications module (a communications terminal) and a handheld communications terminal, an in-vehicle communications module (a communications terminal) and an RSU, and a handheld communications terminal and an RSU. In an example, FIG. 2A to FIG. 2C show an example in which both the first terminal device 201 and the second terminal device 202 are in-vehicle communications modules (or in-vehicle communications terminals, which are disposed in the vehicles shown in FIG. 2A to FIG. 2C).

The network device 203 may be an entity configured to transmit or receive a signal, for example, a radio access network (radio access network, RAN) node that connects a terminal (the first terminal device 201 and/or the second terminal device 202) to a wireless network. Currently, some examples of RAN nodes are: a gNB, a transmission and reception point (transmission reception point, TRP), an evolved NodeB (evolved NodeB, eNB) (or referred to as a macro base station), a micro base station, a radio network controller (radio network controller, RNC), a node B (Node B, NB), a base station controller (base station controller, BSC), a base transceiver station (basetransceiver station,BTS), a home base station (for example, a home evolved NodeB, or home Node B, HNB), a baseband unit (base band unit, BBU), and a baseband pool BBU, or wireless fidelity (wireless fidelity, Wifi) access point (access point, AP). In a network structure, the network device may include a centralized unit (centralized unit, CU) node, a distributed unit (distributed unit, DU) node, or a RAN device including the CU node and the DU node. In an O-RAN system, the CU may also be referred to as an O-CU, and the DU may also be referred to as an O-DU. In some embodiments, in the V2X technology, the network device 203 may also be a terminal, and the terminal is a terminal that may schedule a resource for another terminal (for example, the first terminal device 201) in the Internet of Vehicles, for example, referred to as a head terminal or a group head terminal. Certainly, the terminal may also have a V2X communication capability, that is, may directly exchange data (for example, vehicle data) with another terminal (for example, the first terminal device 201 and/or the second terminal device 202) by using the SL.

It should be noted that, in this embodiment of this application, the cellular network may be a cloud radio access network (cloudradio access network, CRAN), a heterogeneous network (heterogeneous network, HetNet), a universal mobile communication system (universal mobile telecommunication system, UMTS), 4G LTE, or 5G NR, or may be another mobile communication system, such as a next-generation mobile communication system. This is not limited. In addition, the network device 203 interacts with the terminal, for example, the first terminal device 201, by using a Uu (UTRAN-to-UE) air interface.

It should be noted that this application may be applied to any scenario in which a terminal directly communicates with another terminal. For example, this application may also be applied to communication between a remote terminal (remote UE) and a relay terminal (relay UE) in a terminal-to-network relay (UE-to-network relay) scenario, or may be applied to communication between a source terminal (source UE) and a relay terminal (relay UE) in a terminal-to-terminal relay (UE-to-UE relay) scenario, or may be applied to communication between a relay terminal (relay UE) and a target terminal (target UE), the method may also be applied to a collaboration (cooperation) scenario and the like. In this embodiment of this application, an example in which the method is applied to a sidelink communication scenario is used for description, and an application scenario is not limited.

With reference to the foregoing network architecture, the following describes a communication method provided in an embodiment of this application.

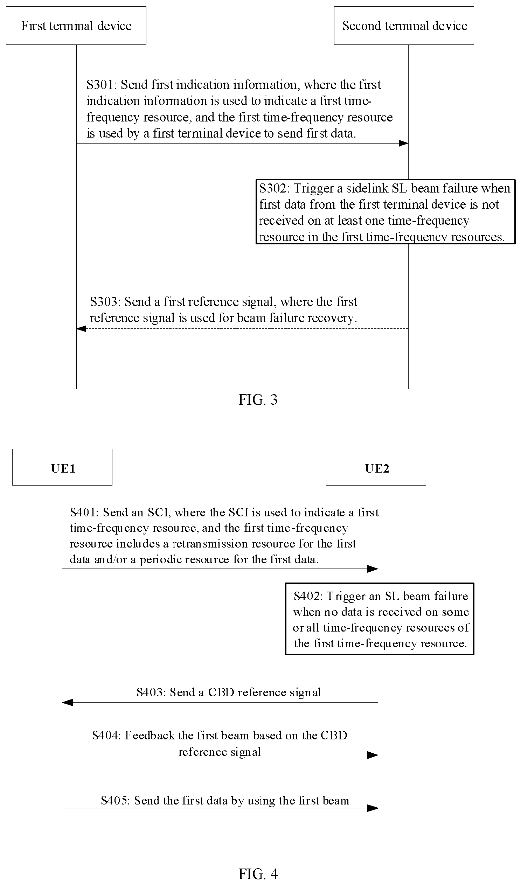

FIG. 3 is a schematic flowchart of a communication method according to an embodiment of this application. In this embodiment, a function performed by the first terminal device may also be performed by a module (for example, a chip) in the first terminal device, and a function performed by the second terminal device in this application may also be performed by a module (for example, a chip) in the second terminal device.

As shown in FIG. 3, the communication method may include the following steps.

S301: A first terminal device sends first indication information to a second terminal device, where the first indication information indicates a first time-frequency resource, and the first time-frequency resource is used by the first terminal device to send first data.

Correspondingly, the second terminal device receives the first indication information from the first terminal device.

The first time-frequency resource is at least one retransmission resource of the first data; or the first time-frequency resource is at least one periodic resource of the first data; or the first time-frequency resource includes at least one retransmission resource of the first data and at least one periodic resource of the first data.

For example, when the first time-frequency resource is the at least one retransmission resource of the first data, the first data is retransmitted data, and data corresponding to each retransmission resource is the same, that is, the first data. For another example, when the first time-frequency resource is the at least one periodic resource of the first data, the first data is a sum of period data corresponding to all periodic resources, and period data corresponding to all periodic resources is different. For another example, when the first time-frequency resource includes the at least one retransmission resource of the first data and the at least one periodic resource of the first data, the first data includes retransmission data and periodic data corresponding to each periodic resource, and all retransmission resources correspond to same data.

For example, the first indication information may be an SCI or a Media Access Control information element MAC CE.

S302. When the second terminal device does not receive the first data from the first terminal device on the at least one time-frequency resource of the first time-frequency resource, the second terminal device triggers a sidelink SL beam failure.

The at least one time-frequency resource may be the first time-frequency resource, that is, the first time-frequency resource may be one or more time-frequency resources. That the first data from the first terminal device is not received on the at least one time-frequency resource of the first time-frequency resource means that the first data from the first terminal device is not received on all time-frequency resources of the first time-frequency resource. Alternatively, the at least one time-frequency resource may be some time-frequency resources in the first time-frequency resource. In other words, the first time-frequency resource includes a plurality of time-frequency resources. That the first data from the first terminal device is not received on at least one time-frequency resource in the first time-frequency resource means that the data from the first terminal device is not received on some time-frequency resources in the first time-frequency resource.

That the second terminal device receives or decodes the first-level SCI and the second-level SCI means that the second terminal device receives or decodes the first-level SCI and the second-level SCI, but does not receive or decode corresponding data. Alternatively, that the second terminal device receives or decodes the first-level SCI means that the second terminal device receives or decodes the first-level SCI, but does not receive or decode the second-level SCI and corresponding data. Alternatively, that the second terminal device does not receive the first-stage SCI, the second-stage SCI, and the corresponding data means that the second terminal device does not receive or decode the first-stage SCI, the second-stage SCI, and the corresponding data.

In some embodiments, when the second terminal device does not receive the first data from the first terminal device on the at least one time-frequency resource of the first time-frequency resource, the SL beam failure is triggered.

The at least one time-frequency resource may be at least one retransmission resource of the first data; or the at least one time-frequency resource may be at least one periodic resource of the first data; or the at least one time-frequency resource includes at least one retransmission resource of the first data and at least one periodic resource of the first data.

For example, the at least one time-frequency resource is N periodic resources of the first data, and N is a positive integer. In this case, when the second terminal device does not receive the data from the first terminal device on the N periodic resources, the SL beam failure is triggered. For example, N may be an integer greater than 1, and two adjacent periodic resources in the N periodic resources have equal period duration in time domain. In other words, when the second terminal device does not receive the period data from the first terminal device on a plurality of adjacent periodic resources in time domain, SL beam failure is triggered.

For another example, the at least one time-frequency resource may be at least one retransmission resource of the first data. In this case, the second terminal device may trigger SL beam failure when the second terminal device does not receive the data from the first terminal device on one or two retransmission resources in the at least one retransmission resource.

For another example, the at least one time-frequency resource may include at least one periodic resource of the first data and at least one retransmission resource of the first data. In this case, when the second terminal device does not receive the data from the first terminal device on at least one resource of the at least one periodic resource of the first data or the at least one retransmission resource of the first data, the SL beam may be triggered to fail, or the second terminal device may sort a plurality of time-frequency resources (including at least one periodic resource and at least one retransmission resource) by time, the beam fails to be triggered when no data is received on a plurality of consecutive time-frequency resources. A quantity of consecutive time-frequency resources is not limited.

In some other embodiments, when the second terminal device does not receive the data from the first terminal device on the at least one time-frequency resource of the first time-frequency resource, the second terminal device first sends second indication information to the first terminal device, where the second indication information indicates that the second terminal device does not receive the data on the at least one time-frequency resource; and when the second terminal device does not receive third indication information from the first terminal device in the first time period, the SL beam failure is triggered, where the third indication information indicates that no beam failure occurs.

Optionally, the second indication information may be used to indicate beam failure acknowledgment, or the second indication information is used to request beam status feedback.

Optionally, the third indication information indicates that the beam is normal; or the third indication information indicates that the first data is not sent yet; or the third indication information indicates a reason why the first data is not sent; or the third indication information is the first data or other data reserved for transmission between the first terminal device and the second terminal device.

Optionally, the second indication information is sent by using a first physical layer sidelink feedback channel PSFCH resource, and the first PSFCH resource and a second PSFCH resource used to feed back a hybrid automatic repeat request HARQ for the first data have a same time domain and different frequency domain.

Optionally, the start moment and the end moment of the first time period are determined based on a moment for sending the second indication information and a time offset. Alternatively, the first time period may be predefined, configured, or configured. It should be understood that "predefined" may be understood as defined in a standard, and does not need to be configured by another device (and the network device or another terminal device cannot be changed), and is information recorded/written in advance in hardware and/or software of the terminal device (for example, the first terminal device and the second terminal device). "configuration" is classified into network device configuration and terminal device configuration. If the configuration is performed by the network device, the configuration may be changed by using SIB or RRC signaling. If the configuration is performed by the terminal device, the configuration may be changed by the hardware or the software, the value is determined by the manufacturer and can be changed through software or hardware.

For example, the first time period may be in M timeslots or in M time windows after the second indication information is sent, where M is a positive integer. The quantity of timeslots and the time window location may be predefined, configured, or preconfigured. It should be understood that "predefined" may be understood as defined in a standard, and does not need to be configured by another device (and the network device or another terminal device cannot be changed), and is information recorded/written in advance in hardware and/or software of the terminal device (for example, the first terminal device and the second terminal device). "configuration" is classified into network device configuration and terminal device configuration. If the configuration is performed by the network device, the configuration may be changed by using SIB or RRC signaling. If the configuration is performed by the terminal device, the configuration may be changed by the hardware or the software, the value is determined by the manufacturer and can be changed through software or hardware.

The at least one time-frequency resource may be at least one retransmission resource of the first data; or the at least one time-frequency resource may be at least one periodic resource of the first data; or the at least one time-frequency resource includes at least one retransmission resource of the first data and at least one periodic resource of the first data.

For example, the at least one time-frequency resource is N periodic resources of the first data, and N is a positive integer. In this case, when the second terminal device does not receive the data from the first terminal device on the N periodic resources, the second terminal device first sends the second indication information to the first terminal device; and when the second terminal device does not receive the third indication information from the first terminal device in the first time period, the SL beam failure is triggered. For example, N may be an integer greater than 1, and two adjacent periodic resources in the N periodic resources have an equal interval of period duration in time domain. In other words, the second terminal device sends the second indication information to the first terminal device when the second terminal device does not receive the period data from the first terminal device on a plurality of adjacent periodic resources in time domain.

For another example, the at least one time-frequency resource may be at least one retransmission resource of the first data. In this case, the second terminal device may first send the second indication information to the first terminal device when the second terminal device does not receive the data from the first terminal device on one or two retransmission resources in the at least one retransmission resource, and then trigger SL beam failure when the second terminal device does not receive the third indication information from the first terminal device in the first time period.

For another example, the at least one time-frequency resource may include at least one periodic resource of the first data and at least one retransmission resource of the first data. In this case, when the data from the first terminal device is not received on at least one resource of the at least one periodic resource of the first data or the at least one retransmission resource of the first data, the second terminal device may first send the second indication information to the first terminal device, and then trigger SL beam failure when the third indication information from the first terminal device is not received in the first time period.

S303: The second terminal device sends a first reference signal to the first terminal device, where the first reference signal is used for beam failure recovery.

Correspondingly, the first terminal device receives the first positioning reference signal from the second terminal device. It should be understood that step S303 is an optional step, and is shown by using a dashed line in FIG. 3.

In some embodiments, the second terminal device may send the first reference signal on a plurality of different reference signal resources, where the plurality of reference signal resources correspond to different beams. In this way, the first terminal device may perform beam measurement on the received first reference signal, and determine the first reference signal resource from the plurality of reference signal resources, where the first reference signal resource corresponds to the first beam. The first terminal device sends indication information of the first reference signal resource to the second terminal device, that is, feeds back the first beam to the second terminal device. The first terminal device may perform data transmission with the second terminal device by using the first beam, for example, send the first data.

Optionally, the first reference signal is one of a sidelink synchronization signal block S-SSB, a sidelink channel state information reference signal SL CSI-RS, or a demodulation reference signal DMRS.

It should be understood that the first reference signal may also be referred to as a CBD reference signal.

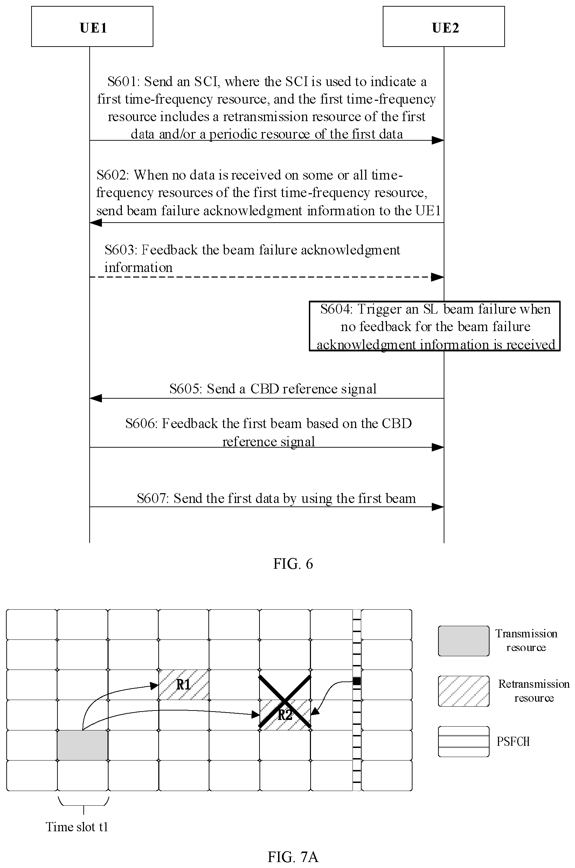

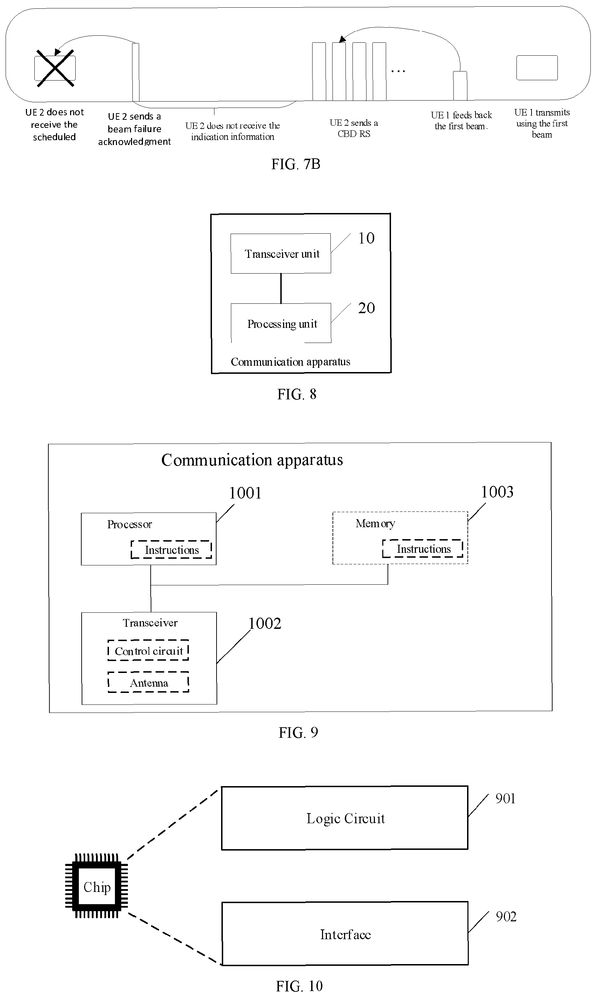

The method embodiment shown in FIG. 3 includes many possible implementation solutions. The following describes some of the implementation solutions by using examples with reference to FIG. 4 and FIG. 7. It should be noted that, for related concepts, operations, or logical relationships that are not explained in FIG. 4 and FIG. 7, refer to corresponding descriptions in the embodiment shown in FIG. 3.

FIG. 4 is a schematic flowchart of another communication method according to an embodiment of this application;

In this embodiment of this application, an example in which a first terminal device is UE1 and a second terminal device is UE2 is used to describe in detail the communication method provided in this application. In this embodiment of this application, a function performed by the UE may alternatively be performed by a module (for example, a chip) in the UE, and a function performed by the base station in this application may alternatively be performed by a module (for example, a chip) in the base station.

As shown in FIG. 4, the decision-making method may include some or all of the following steps.

S401. UE 1 sends SCI to UE 2, where the SCI indicates a first time-frequency resource, and the first time-frequency resource includes a retransmission resource of first data and/or a periodic resource of the first data.

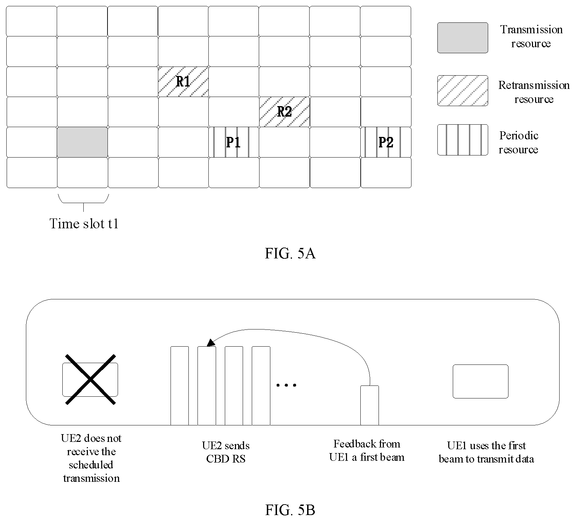

FIG. 5A is a schematic diagram in which UE 1 indicates a retransmission resource and a periodic resource to UE 2 according to an embodiment of this application. As shown in FIG. 5A, according to a resource selection procedure (2) in the foregoing related technology, the UE 1 may select retransmission resources (R1 and R2) and periodic resources (P1 and P2) in FIG. 5A, and indicate these resources in SCI sent in a timeslot t1.

For example, the retransmission resource may be indicated by a frequency resource assignment field and a time resource assignment field in the SCI, and the periodic resource is indicated by a resource reservation period field in the SCI.

It should be understood that step S401 may also be referred to as that the UE 1 indicates/reserves a retransmission resource and/or a periodic resource of the first data, and the first time-frequency resource may also be referred to as a reserved resource or a reserved resource. For example, FIG. 5A shows an example in which the first time-frequency resource includes two retransmission resources (R1 and R2) and two periodic resources (P1 and P2). R1, R2, P1, and P2 may be referred to as four reserved resources.

S402. When the UE 2 does not receive data on a part or all of the time-frequency resource of the first time-frequency resource, the UE 2 triggers an SL beam failure.

It should be understood that the UE 2 determines the retransmission resource and/or the periodic resource of the UE 1 based on the information indicated/reserved by the UE 1 in the SCI, and the UE 2 expects to receive, on a corresponding time-frequency resource, data transmitted by the UE 1. For example, if the UE 2 does not receive one or more reserved resources in FIG. 5A on a corresponding time-frequency resource, an SL beam failure is triggered. Examples are as follows.

In an implementation, the UE 1 indicates/reserves only a retransmission resource: If the UE 2 does not receive one or more of R1 and R2 and subsequent retransmission resources (in the prior art, the UE can indicate only two retransmission resources during one transmission, but may continue to indicate a new retransmission resource on the retransmission resource, for example, R2, the SL beam failure is triggered. It should be noted that, if the UE 2 has fed back a response ACK to the data, that is, the UE 1 does not need to perform retransmission again, the SL beam failure is not triggered.

In another implementation, the UE 1 indicates/reserves only a periodic resource: If the UE 2 does not receive one or more of P1, P2, and subsequent resources, an SL beam failure is triggered, where a quantity of unreceived resources is determined by a threshold.

In still another implementation, if the UE 1 indicates/reserves a retransmission resource and a periodic resource, that is, the first time-frequency resource includes the retransmission resource and the periodic resource, for example, the first time-frequency resource may include R1, P1, R2, and P2 shown in FIG. 5A, if the UE 2 does not receive data of one or more indication/reservation resources, an SL beam failure is triggered. A quantity of unreceived resources is determined by a threshold. For example, when the UE 2 does not receive N consecutive reserved resources (for example, R1, P1, R2, and P2) in a time sequence, the SL beam failure may be triggered, where N is an integer greater than 1.

S403: The UE 2 sends a CBD reference signal to the UE 1.

In an implementation, after the UE 2 triggers beam failure, the UE 2 may use the S-SSB or the SL CSI-RS as a CBD reference signal (that is, a CBD RS), and send the CBD reference signal. For example, when sending the S-SSB, the UE2 carries both the SRC ID and the DST ID, and the UE1 determines, according to the SRC ID and the DST ID, that the CBD RS is sent by the UE2. For another example, the UE 2 may indicate, in the SCI/MAC CE, that the RS is used for beam failure recovery.

S404: The UE 1 feeds back the first beam to the UE 2 based on the CBD reference signal.

In an implementation, the CBD reference signals are sent by using different beams, that is, each CBD reference signal corresponds to one beam, and the different beams include a first beam. The UE 1 may measure a plurality of received CBD reference signals, and select a beam corresponding to a CBD reference signal whose RSRP is greater than a threshold and/or whose RSRP is maximum as the first beam. After determining the first beam, the UE 1 may feed back the first beam to the UE 2 on a corresponding preset resource.

The first beam may also be referred to as an optimal beam.

S405: The UE1 sends first data to the UE2 by using the first beam.

For ease of understanding, a specific process of FIG. 4 is illustrated below by using FIG. 5B. FIG. 5B is a schematic diagram of a beam failure recovery procedure according to an embodiment of this application. As shown in FIG. 5B, the UE 2 triggers an SL beam failure based on indication/reservation information of the UE 1, and triggers sending of a CBD reference signal. The UE 1 measures the reference signal, determines a first beam, and performs feedback. Finally, the UE 1 transmits data by using the first beam.

In this embodiment of this application, a resource selection feature of the SL is used to determine, based on whether the first time-frequency resource (that is, a reserved resource) is transmitted, whether an SL beam failure occurs. In this method, a transmit end does not need to send a periodic reference signal for determining, so that fast beam failure recovery detection can be implemented, and a resource waste caused by sending the periodic reference signal can be avoided.

FIG. 6 is a schematic flowchart of still another communications method according to an embodiment of this application.

In this embodiment of this application, an example in which a first terminal device is UE1 and a second terminal device is UE2 is used to describe in detail the communication method provided in this application. In this embodiment of this application, a function performed by the UE may alternatively be performed by a module (for example, a chip) in the UE, and a function performed by the base station in this application may alternatively be performed by a module (for example, a chip) in the base station.

In this embodiment of this application, the receive end (the UE 2) sends the acknowledgment information again after receiving no retransmission/periodic data indicated/reserved by the transmit end (that is, the UE 1), to avoid a case in which the receive end incorrectly triggers an SL beam failure because the transmit end does not send (for example, data with a higher receiving priority) on a reserved resource due to another reason.

As shown in FIG. 6, the decision-making method may include some or all of the following steps.

S601. UE 1 sends SCI to UE 2, where the SCI indicates a first time-frequency resource, and the first time-frequency resource includes a retransmission resource of first data and/or a periodic resource of the first data.

For example, for step S601, refer to specific implementation of step S401. Details are not described herein again.

S602: When the UE 2 does not receive data on a part or all of the time-frequency resource of the first time-frequency resource, the UE 2 sends beam failure acknowledgment information to the UE 1.

It should be understood that the UE 2 determines the retransmission resource and/or the periodic resource of the UE 1 based on the information indicated/reserved by the UE 1 in the SCI, and the UE 2 expects to receive, on a corresponding time-frequency resource (that is, the first time-frequency resource), data transmitted by the UE 1. For example, if the UE 2 does not receive one or more reserved resources in FIG. 5A on a corresponding time-frequency resource, SL beam failure determining is triggered, that is, the UE 2 sends beam failure acknowledgment information (that is, the second indication information) to the UE 1 at a feedback location corresponding to the time-frequency resource that is not received.

FIG. 7A is a schematic diagram of sending beam failure acknowledgment information according to an embodiment of this application; As shown in FIG. 7A, if the UE2 does not receive the R2 reserved by the UE1, the UE2 may send the beam failure acknowledgment information in the PSFCH in the slot t2.

Optionally, the resource mapping relationship of the PSFCH may be the same as the manner in (3) PSFCH in the foregoing related technology. To distinguish from an existing PSFCH resource used to feed back a HARQ, an additional bitmap may be used for the PSFCH resource used to indicate the beam failure acknowledgment information.

For example, the following describes three possible implementations of triggering SL beam failure determining.

In an implementation, the UE 1 indicates/reserves only a retransmission resource: If the UE 2 does not receive one or more of R1 and R2 and a subsequent retransmission resource (in the prior art, the UE can indicate only two retransmission resources during one transmission, but may continue to indicate a new retransmission resource on the retransmission resource, for example, R2, the SL beam failure determining is triggered. It should be noted that if the UE 2 has fed back a response ACK to the data, that is, the UE 1 does not need to perform retransmission again, SL beam failure determining is not triggered.

In another implementation, the UE 1 indicates/reserves only a periodic resource: If the UE 2 does not receive one or more of P1, P2, and a subsequent resource, SL beam failure determining is triggered, where a quantity of unreceived resources is determined by a threshold.

In still another implementation, if the UE 1 indicates/reserves a retransmission resource and a periodic resource, if the UE 2 does not receive data of one or more indication/reservation resources, SL beam failure determining is triggered, where a quantity of unreceived data is determined based on a threshold.

S603. The UE 1 feeds back the beam failure acknowledgment information.

In an implementation, if the UE 1 receives the beam failure acknowledgment information, the UE 1 needs to send the indication information in the SCI and/or the MAC CE in the M slots or in the time window, to indicate that the UE 1 does not send the R1, the R2/P1, and the P2 due to another reason, and therefore no beam failure occurs. M is a positive integer.

The quantity of timeslots and the time window location may be predefined, configured, or preconfigured. It may be understood that the "predefined" may be understood as that information is defined in a standard, does not need to be configured by another device (nor changed by a network device or another terminal device), and is recorded/written in advance in hardware and/or software of a terminal device. The "configured" includes configuration performed by a network device and configuration performed by a terminal device. If configuration is performed by the network device, the configuration may be changed by using a SIB or RRC signaling. If configuration is performed by the terminal device, the configuration may be changed based on PC5-RRC signaling. "Preconfigured" may be understood as that information is pre-recorded/pre-written in hardware and/or software of the terminal device, is determined by a device manufacturer, and may be changed by using software or hardware.

S604. When the UE 2 does not receive a feedback for the beam failure acknowledgment information, the UE 2 triggers an SL beam failure.

In an implementation, after the UE 2 sends the beam failure acknowledgment information, if the indication information of the UE 1 is not received in the M slots or the time window, the UE 2 triggers an SL beam failure.

S605: The UE 2 sends a CBD reference signal to the UE 1.

In an implementation, after the UE 2 triggers beam failure, the UE 2 may use the S-SSB or the SL CSI-RS as a CBD reference signal (that is, a CBD RS), and send the CBD reference signal. For example, when sending the S-SSB, the UE2 carries both the SRC ID and the DST ID, and the UE1 determines, according to the SRC ID and the DST ID, that the CBD RS is sent by the UE2. For another example, the UE 2 may indicate, in the SCI/MAC CE, that the RS is used for beam failure recovery.

S606: The UE 1 feeds back the first beam to the UE 2 based on the CBD reference signal.

For example, for step S606, refer to specific implementation of step S404. Details are not described herein again.

S607: The UE1 sends first data to the UE2 by using the first beam.

For ease of understanding, the following uses FIG. 7B to illustrate a specific process of FIG. 6. FIG. 7B is a schematic diagram of another beam failure recovery procedure according to an embodiment of this application. As shown in FIG. 7B, the UE 2 determines beam failure based on indication/reservation information of the UE 1 and sends beam failure acknowledgment information. If the UE 2 does not receive the indication information of the UE 1 within a specific time, the UE 2 triggers SL beam failure, and triggers sending of a CBD reference signal. The UE 1 measures the CBD reference signal, determines a first beam, and performs feedback. Finally, the UE 1 transmits data by using the first beam.

In this embodiment of this application, whether an SL beam failure occurs is determined based on the first time-frequency resource (that is, a reserved resource) and a beam failure confirmation process (that is, the foregoing step S602 to step S604). In this method, the beam failure confirmation process can be used to avoid an erroneous determining caused by not sending data due to another reason, and can further avoid a resource waste caused by sending a periodic reference signal.

The foregoing content describes in detail the method provided in this application. To facilitate implementation of the foregoing solutions in embodiments of this application, embodiments of this application further provide a corresponding apparatus or device.

In this application, the first device and the second device are divided into function modules based on the foregoing method embodiments. For example, each function module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail a communication apparatus in embodiments of this application with reference to FIG. 8 to FIG. 10.

FIG. 8 is a diagram of a structure of a communication apparatus according to an embodiment of this application. As shown in FIG. 8, the communication apparatus may include a transceiver unit 10 and a processing unit 20.

In some embodiments of this application, the communication apparatus may be the second terminal device shown above, or a chip or a circuit disposed in the second terminal device. In other words, the communication apparatus may be configured to perform steps, functions, or the like performed by the terminal device in the foregoing method embodiments.

In a design, the transceiver unit 10 is configured to receive first indication information from a first terminal device, where the first indication information indicates a first time-frequency resource, and the first time-frequency resource is used by the first terminal device to send first data. The processing unit 20 is configured to: when the first data from the first terminal device is not received on at least one time-frequency resource of the first time-frequency resource, trigger a sidelink SL beam failure. The transceiver unit 10 is configured to send a first reference signal, where the first reference signal is used for beam failure recovery.

In a possible implementation, the at least one time-frequency resource is at least one retransmission resource of the first data; or the at least one time-frequency resource is at least one periodic resource of the first data; or the at least one time-frequency resource includes at least one retransmission resource of the first data and at least one periodic resource of the first data.

For example, the at least one time-frequency resource is N periodic resources of the first data, and N is a positive integer. The processing unit 20 is configured to trigger SL beam failure when the data from the first terminal device is not received on the N periodic resources.

For example, N is an integer greater than 1, and two adjacent periodic resources in the N periodic resources are separated by equal period duration in time domain.

For example, the at least one time-frequency resource is at least one retransmission resource of the first data; and the processing unit 20 is configured to trigger SL beam failure when the data from the first terminal device is not received on one or two of the at least one retransmission resource.

In a possible implementation, the transceiver unit 10 is configured to send second indication information to the first terminal device when no data from the first terminal device is received on the at least one time-frequency resource, where the second indication information indicates that no data is received on the at least one time-frequency resource; and the processing unit 20 is configured to trigger SL beam failure when no third indication information from the first terminal device is received in a first time period, where the third indication information indicates that no beam failure occurs.

In a possible implementation, the second indication information is sent by using a first physical layer sidelink feedback channel PSFCH resource, and the first PSFCH resource and a second PSFCH resource used to feed back a hybrid automatic repeat request HARQ for the first data are the same in time domain and different in frequency domain.

For example, the start moment and the end moment of the first time period are determined based on the moment at which the second indication information is sent and the time offset.

For example, the first reference signal is one of a sidelink synchronization signal block S-SSB, a sidelink channel state information reference signal SL CSI-RS, or a demodulation reference signal DMRS.

In this embodiment of this application, for descriptions of the first indication information, the first time-frequency resource, and the like, refer to the descriptions in the method embodiments shown in FIG. 3, FIG. 4, and FIG. 6. Details are not described herein again.

It may be understood that the specific descriptions of the transceiver unit and the processing unit in embodiments of this application are merely examples. For specific functions, steps, or the like performed by the transceiver unit and the processing unit, refer to the method embodiments shown in FIG. 3, FIG. 4, and FIG. 6. Details are not described herein again. In addition, for technical effects of this embodiment of this application, refer to the technical effects in the method embodiments shown in FIG. 3, FIG. 4, and FIG. 6. For brevity, details are not described herein again.

Still refer to FIG. 8. In some other embodiments of this application, the communication apparatus may be the terminal device shown above, or a chip or a circuit disposed in the terminal device. In other words, the communication apparatus may be configured to perform steps, functions, or the like performed by the terminal device in the foregoing method embodiments.

In a design, the transceiver unit 10 is configured to: send first indication information to a second terminal device, where the first indication information indicates a first time-frequency resource, and the first time-frequency resource is used to send first data; receive second indication information from the second terminal device, where the second indication information indicates that no data is received on at least one time-frequency resource of the first time-frequency resource; and send third indication information to the second terminal device in a first time period, where the third indication information indicates that no sidelink SL beam failure occurs. In a possible implementation, the processing unit 20 is configured to determine a first time-frequency resource.

It may be understood that the specific descriptions of the transceiver unit and the processing unit in embodiments of this application are merely examples. For specific functions, steps, or the like performed by the transceiver unit and the processing unit, refer to the method embodiments shown in FIG. 3, FIG. 4, and FIG. 6. Details are not described herein again. In addition, for technical effects of this embodiment of this application, refer to the technical effects in the method embodiments shown in FIG. 3, FIG. 4, and FIG. 6. For brevity, details are not described herein again.

The foregoing describes the first terminal device and the second terminal device in the embodiments of this application. The following describes possible product forms of the first terminal device and the second terminal device. It should be understood that any form of product that has functions of the network device or the terminal device described in FIG. 8 falls within the protection scope of embodiments of this application. It should be further understood that the following description is merely an example, and does not limit a product form of the communication apparatus in embodiments of this application.

In a possible implementation, in the communication apparatus shown in FIG. 8, the processing unit 20 may be one or more processors. The transceiver unit 10 may be a transceiver, or the transceiver unit 10 may be a sending unit and a receiving unit. The sending unit may be a transmitter, and the receiving unit may be a receiver. The sending unit and the receiving unit are integrated into one device, for example, a transceiver. In embodiments of this application, the processor and the transceiver may be coupled, or the like. A connection manner between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information and inputs the information to the processor. Further, after the transceiver receives the information, other processing may need to be performed on the information before the information is input into the processor.

FIG. 9 is a diagram of another structure of a communication apparatus according to an embodiment of this application. As shown in FIG. 9, the communication apparatus provided in this embodiment of this application may be configured to implement the method described in the foregoing method embodiments. For details, refer to the descriptions in the foregoing method embodiments. The communication apparatus may be a first terminal device, a second terminal device, or a chip in the first terminal device or the second terminal device. For example, the communication apparatus includes one or more processors 1001 and a transceiver 1002. The communication apparatus may further include a memory 1003. In an implementation, the communication apparatus further includes an input/output apparatus (not shown in FIG. 9).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and then outputs a baseband signal to the radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1001. The processor 1001 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform steps, methods, or functions performed by the terminal device in the embodiment shown in FIG. 3, the transceiver 1002 may be configured to perform step S301 and step S303 in FIG. 3, and/or another process of the technology described in this specification.

For example, when the communication apparatus is configured to perform the steps, the methods, or the functions performed by the second terminal device in the embodiment shown in FIG. 3, the transceiver 1002 may be configured to perform step S301 and step S303 in FIG. 3, and the processor 1001 may be configured to perform S302 in FIG. 3, and/or another process of the technology described in this specification.

In any one of the foregoing implementations, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1001 may store instructions, and the instructions may be a computer program. The computer program is run on the processor 1001, to enable the communication apparatus to perform the method described in the foregoing method embodiments. The computer program may be embedded in the processor 1001. In this case, the processor 1001 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (N-type Metal-oxide-semiconductor, NMOS), a p-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may further have more components and the like than those in FIG. 9. This is not limited in embodiments of this application. The foregoing method performed by the processor and the transceiver is merely an example. For specific steps performed by the processor and the transceiver, refer to descriptions in the foregoing method embodiments.

In another possible implementation, the communication apparatus shown in FIG. 9 may further include a processing unit. The processing unit may be one or more logic circuits. A sending unit 20 and a receiving unit 10 may be input/output interfaces, or may be referred to as communication interfaces, interface circuits, interfaces, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface.

FIG. 10 is a diagram of still another structure of a communication apparatus according to an embodiment of this application. As shown in FIG. 10, the communication apparatus shown in FIG. 10 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. FIG. 10 shows an example in which the communication apparatus is a chip. The chip includes the logic circuit 901 and the interface 902.

In this embodiment of this application, the logic circuit and the interface may be coupled to each other. A specific manner of connection between the logical circuit and the interface is not limited in this embodiment of this application.

For example, when the communication apparatus is configured to perform the steps, the methods, or the functions performed by the first terminal device in the method embodiment shown in FIG. 3, the logic circuit 901 is configured to determine first indication information; and the interface 902 is configured to send the first indication information.

For example, when the communication apparatus is configured to perform the steps, the methods, or the functions performed by the second terminal device in the method embodiment shown in FIG. 3, the logic circuit 901 is configured to trigger a sidelink SL beam failure when the first data from the first terminal device is not received on the at least one time-frequency resource in the first time-frequency resource. The interface 902 is configured to receive the first indication information.

In this embodiment of this application, for descriptions of the first indication information, the second indication information, and the like, refer to the descriptions in the method embodiments shown in FIG. 3. Details are not described herein again. It may be understood that, for specific descriptions of the logic circuit 901 and the interface 902, refer to the descriptions of the processing unit and the transceiver unit shown in FIG. 8. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 10, refer to the foregoing embodiments. Details are not described herein again.

An embodiment of this application further provides a communication system. The communication system includes a first terminal device and a second terminal device. The first terminal device and the second terminal device may be configured to perform the method in any one of the foregoing method embodiments (FIG. 3, FIG. 4, and FIG. 6).

In addition, this application further provides a computer program. The computer program is used to implement operations and/or processing performed by a terminal device (for example, the first terminal device and the second terminal device) in the method provided in this application.

This application further provides a computer-readable storage medium. The computer-readable storage medium stores computer code. When the computer code is run on a computer, the computer is enabled to perform operations and/or processing performed by the first device or the second device in the method provided in this application.

This application further provides a computer program product. The computer program product includes computer code or a computer program. When the computer code or the computer program is run on a computer, operations and/or processing performed by the first device or the second device in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first indication information from a first terminal device, wherein the first indication information indicates a first time-frequency resource, and the first time-frequency resource is used by the first terminal device to send first data;
triggering a sidelink SL beam failure when the first data from the first terminal device is not received on at least one time-frequency resource in the first time-frequency resource; and
sending a first reference signal, wherein the first reference signal is used for beam failure recovery.

2. The method according to claim 1, wherein
the at least one time-frequency resource is at least one retransmission resource of the first data;
the at least one time-frequency resource is at least one periodic resource of the first data; or,
the at least one time-frequency resource comprises at least one retransmission resource of the first data and at least one periodic resource of the first data.

3. The method according to claim 2, wherein the at least one time-frequency resource is N periodic resources of the first data, N is a positive integer, and the triggering the SL beam failure when the first data from the first terminal device is not received on the at least one time-frequency resource in the first time-frequency resource comprises:
triggering the SL beam failure when no data from the first terminal device is received on the N periodic resources.

4. The method according to claim 3, wherein N is an integer greater than 1, and two adjacent periodic resources in the N periodic resources are spaced by equal period duration in time domain.

5. The method according to claim 2, wherein the at least one time-frequency resource is the at least one retransmission resource of the first data, and the triggering the SL beam failure when the first data from the first terminal device is not received on the at least one time-frequency resource in the first time-frequency resource comprises:
triggering the SL beam failure when no data from the first terminal device is received on one or two retransmission resources in the at least one retransmission resource.

6. The method according to claim 1 or 2, wherein the triggering the SL beam failure when the first data from the first terminal device is not received on the at least one time-frequency resource in the first time-frequency resource comprises:
sending second indication information to the first terminal device when no data from the first terminal device is received on the at least one time-frequency resource, wherein the second indication information indicates that no data is received on the at least one time-frequency resource; and
triggering the SL beam failure when third indication information from the first terminal device is not received in a first time period, wherein the third indication information indicates that no beam failure occurs.

7. The method according to claim 6, wherein the second indication information is sent by using a first physical sidelink feedback channel PSFCH resource, and the first PSFCH resource and a second PSFCH resource used to feed back a hybrid automatic repeat request HARQ of the first data are in same time domain but different frequency domain.

8. The method according to claim 6 or 7, wherein a start moment and an end moment of the first time period are determined based on a moment at which the second indication information is sent and a time offset.

9. The method according to any one of claims 1 to 7, wherein the first reference signal is one of a sidelink synchronization signal block S-SSB, a sidelink channel state information reference signal SL CSI-RS, or a demodulation reference signal DMRS.

10. A communication method, wherein the method comprises:
sending first indication information to a second terminal device, wherein the first indication information indicates a first time-frequency resource, and the first time-frequency resource is used to send first data;
receiving second indication information from the second terminal device, wherein the second indication information indicates that no data is received on at least one time-frequency resource in the first time-frequency resource; and
sending third indication information to the second terminal device in a first time period, wherein the third indication information indicates that no sidelink SL beam failure occurs.

11. A communication apparatus, comprising a module or a unit configured to perform the method according to any one of claims 1 to 10.

12. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 10 by using a logic circuit or by executing code instructions.

13. A readable storage medium, configured to store a program, wherein the program is executed by one or more processors, to cause an apparatus comprising the one or more processors to perform the method according to any one of claims 1 to 10.

14. A communication system, comprising a second terminal device configured to perform the method according to any one of claims 1 to 9, and a first terminal device configured to perform the method according to claim 10.
